# EUROPEAN PATENT SPECIFICATION

(11) **EP 3 759 757 B1**
(45) Date of publication and mention of the grant of the patent: **30.03.2022**
(21) Application number: 19719934.2
(22) Date of filing: 28.02.2019
(51) Int. Cl.: H01M 8/04858, H01M 8/04828, H01M 8/04537, H01M 8/04664, H01M 8/04746

(54) **A METHOD FOR CONTROLLING A HYDROGEN FUEL CELL SYSTEM WHICH IS ARRANGED FOR PROVIDING POWER TO AN ELECTRICAL MOTOR, AS WELL AS A CORRESPONDING HYDROGEN FUEL CELL SYSTEM**
VERFAHREN ZUR STEUERUNG EINES WASSERSTOFFBRENNSTOFFZELLENSYSTEMS, DAS ZUR STROMVERSORGUNG EINES ELEKTROMOTORS ANGEORDNET IST, SOWIE ZUGEHÖRIGES WASSERSTOFFBRENNSTOFFZELLENSYSTEM
PROCÉDÉ DE COMMANDE D'UN SYSTÈME DE PILE À COMBUSTIBLE HYDROGÈNE CONÇU POUR FOURNIR DE L'ÉNERGIE À UN MOTEUR ÉLECTRIQUE, AINSI QUE SYSTÈME DE PILE À COMBUSTIBLE HYDROGÈNE CORRESPONDANT

(30) Priority: 01.03.2018 NL 2020514
(43) Date of publication of application: 06.01.2021
(73) Proprietor: Hymove B.V., 6827 AV Arnhem (NL)
(72) Inventor: HUPKENS VAN DER ELST, Huibert Andreas, 8051 NW Hattem (NL); HUIJGEN, Jochem Evert, 7351 TJ Hoenderloo (NL)
(74) Representative: Algemeen Octrooi- en Merkenbureau B.V.
(86) International application number: PCT/NL2019/050127
(87) International publication number: WO 2019/168398

(56) References cited:
- WO-A1-00/74162
- WO-A1-2005/008266
- WO-A1-2005/041339
- WO-A1-2008/147370
- US-A1- 2011 144 840
- US-A1- 2017 012 309

## Description

This present disclosure is related to a method for controlling a hydrogen fuel cell system which is arranged for providing power to an electrical motor.

A hydrogen fuel cell system, in accordance with the present disclosure, comprise a plurality of fuel cell devices. Each of the fuel cell devices comprises a plurality of fuel cell stacks and a controller. A fuel cell stack is an electrochemical cell that converts the chemical energy from hydrogen fuel and oxygen into electricity. The electricity may be used, for example, to empower an electrical motor.

Hydrogen fuel cell stacks are thus not the same as regular batteries. Fuel cells work on the basis of fuel that is provided to the fuel cells, i.e. in the form of hydrogen. In a battery, electricity is generated based on chemicals that are already present in the battery.

One of the drawbacks of known hydrogen fuel cell systems is that they have been tested in laboratory settings. The amount of power the fuel cell system is able to provide, the life span of the fuel cell system and all these kinds of aspects have been tested, and confirmed, in a laboratory. Up till now, there is no system available that is able to be flexible, and that is also arranged to extend the lifespan of the hydrogen fuel cell system. WO2005/41339 discloses a method for controlling a hydrogen fuel cell system comprising a plurality of fuel cell devices.

It is an objective of the present disclosure to provide for a method for efficiently controlling a hydrogen fuel cell system.

The present disclosure provides, in a first aspect, in a A method for controlling a hydrogen fuel cell system, comprising a plurality of hydrogen fuel cell devices, wherein said hydrogen fuel cell system is arranged for providing power to an electrical motor by each of said hydrogen fuel cell devices, each of said hydrogen fuel cell devices comprising a plurality of hydrogen fuel cell stacks, and a controller, wherein said plurality of controllers of each of said hydrogen fuel cell devices are interconnected.

The method comprising the steps of:
- detecting, by each of said controllers separately, a total amount of power required to be provided by said hydrogen fuel cell system;
- determining, by each of said controllers separately, a fuel cell device power for its corresponding fuel cell device based on said detected total amount of power and an amount of hydrogen fuel cell devices;
- controlling, by each of said controllers separately, its corresponding fuel cell device to provide said fuel cell device power;
- detecting, by at least one of said plurality of controllers, a deficiency in said total amount of power provided by said plurality of interconnected hydrogen fuel cell devices;
- determining, by said at least one of said plurality of controllers, a fuel cell device deficiency power for resolving said detected deficiency in said total amount of power, based on said amount of hydrogen fuel cell devices;
- controlling, by said at least one of said plurality of controllers, its corresponding fuel cell device to increase its provided power by said fuel cell device deficiency power.

Typically, the amount of power that is required to be provided is shared among the hydrogen fuel cell stacks. As such, the fuel cell stacks provides for a same share of the total amount of power.

It was one of the insights of the inventor that, in case a particular fuel cell device is not able to provide for its share, that particular share should be taken over, equally, by the remainder of the fuel cell devices.

Further, the inventor has found that a decentralized solution in which each fuel cell device is coupled with a single controller is the way to go as that increases the flexibility of the hydrogen fuel cell system. In such a way, the system is flexible as new fuel cell devices may be introduced in the system and/or fuel cell devices may be removed from the system. This is also beneficial for maintenance purposes.

Each of the method steps as disclosed above is explained in more detail here below.

First, the method comprises the step of detecting, by each of said controllers separately, a total amount of power required to be provided by said hydrogen fuel cell system. This could imply that the controller has an input in which the total amount of power that is to be provided by the system is given. That particular input may be the same for each of the controllers. Another option is that a single controller determines the total amount of power required, and that that particular controller communicates the determined total amount of power to the remaining controllers.

Second, the method comprises the step of determining, by each of said controllers separately, a fuel cell device power for its corresponding fuel cell device based on said detected total amount of power and an amount of hydrogen fuel cell devices. This may imply that each controller determines the share of power that its corresponding fuel cell device has to provide for meeting the total amount of required power. For example, each controller may simply divide the total amount of power by the number of fuel cell devices present in the system. Additional over dimensioning may be taken into account for assuring that the fuel cell devices are able to provide the total amount of power.

Third, the method comprises the step of controlling, by each of said controllers separately, its corresponding fuel cell device to provide said fuel cell device power. This may imply that the controller controls the amount of hydrogen and the amount of oxygen, i.e. air, that is to be provided to the corresponding fuel cell device. As such, the controller may control operation of valves, or the like, for inletting the oxygen and/or hydrogen.

Fourth, the method comprises the step of detecting, by at least one of said plurality of controllers, a deficiency in said total amount of power provided by said plurality of interconnected hydrogen fuel cell devices.

The present disclosure is directed to the situation in which a particular hydrogen fuel cell device is not able to provide for its share. The controller corresponding to the particular hydrogen fuel cell device may, for example, broadcast information messages to the other controllers, for informing these other controllers that the particular hydrogen fuel cell device is not able to provide its share. Another option is that each of the remaining controllers detects that there is a deficiency in the total amount of power provided by the fuel cell system.

Fifth, the method comprises the step of determining, by said at least one of said plurality of controllers, a fuel cell device deficiency power for resolving said detected deficiency in said total amount of power, based on said amount of hydrogen fuel cell devices. This would imply that each controller determines the required increase in power that its corresponding hydrogen fuel cell device needs to provide. As mentioned above, in one of the examples, the deficit in total amount of power provided by the fuel cell system is shared among the remaining fuel cell devices.

Sixth, the method comprises the step of controlling, by said at least one of said plurality of controllers, its corresponding fuel cell device to increase its provided power by said fuel cell device deficiency power. This may imply that each controller controls its corresponding valve for increasing the amount of air and/or hydrogen that is provided to its corresponding hydrogen fuel cell device, i.e. the fuel cell stacks in its corresponding fuel cell device.

In an example, each of said controllers are connected to each other via a bus, said method further comprises the step of:
- discovering, by each of said controllers separately, the amount of controllers connected to said bus.

Such a bus is, for example, a CAN bus or anything alike. The bus this connects the controllers to each other.

During an initialisation phase, each of the controllers may discover each other by broadcasting messages over the bus. In such way, a controller may be aware of the other controllers that are connected to the bus. Each controller may thus determine the amount of controllers, and thus also the amount of hydrogen fuel cell devices, that are present in the hydrogen fuel cell system.

In another example, the step of detecting said total amount of power required to be provided by said hydrogen fuel cell system comprises:
- detecting, by each of said controllers separately, said total amount of power required based on input from said electrical motor and based on input from a battery.

It is noted that the hydrogen fuel cell system is to provide energy to an electrical motor. The electrical motor may also be connected to a battery. As such, the battery as well as the fuel cell system may provide power to the electrical motor. In this particular situation, it may be the preference that the battery is to provide power to the electrical motor and the fuel cell system may provide additional power in case the battery is not able to provide sufficient power.

In a further example, the method further comprises the steps of:
- receiving, by each of said controllers separately, input that said electrical motor is shut down;
- venting, by each of said controllers separately, its corresponding fuel cell device, more specifically its fuel cell stacks, with air for removing any residual hydrogen present in these fuel cell stacks.

The inventor has found that it may be beneficial in case the fuel cell stacks are vented with air for removing any residual hydrogen present therein. This may increase the lifespan of the fuel cell stacks and may reduce risks of hazardous voltages during maintenance and service.

In another example, the hydrogen fuel cell system further comprises a monitoring system for monitoring conditions of each of said plurality of fuel cell devices, and comprises a communication module, said method further comprises the steps of:
- monitoring, by said monitoring system, said conditions of each of said plurality of fuel cell stacks;
- communicating, by said communication module, said monitored conditions to a user equipment.

In an alternative, each of the fuel cell devices comprises a monitoring system and a communication module.

The communication module may, for example, be a module based on a 3G, 4G or 5G technology communication networks. The monitored conditions may then be made available for a user, for example a User Equipment, UE, like a telephone, tablet or the like, via a 3G, 4G or 5G communication network.

Alternatively, or in addition thereto, the monitored conditions may be made available via a web interface, like a web portal.

In a second aspect of the present disclosure, there is provided a hydrogen fuel cell system arranged for providing power to an electrical motor, said hydrogen fuel cell system comprising a plurality of hydrogen fuel cell devices, wherein said hydrogen fuel cell system is arranged for providing power to an electrical motor bye ach of said hydrogen fuel cell devices, each of said hydrogen fuel cell devices comprising a plurality of hydrogen fuel cell stacks, and a controller, wherein said plurality of controllers of said hydrogen fuel cell devices are interconnected.

Each of said controllers comprising:
- detect equipment arranged for detecting a total amount of power required to be provided by said hydrogen fuel cell system;
- process equipment arranged for determining a fuel cell device power for its corresponding fuel cell device based on said detected total amount of power and an amount of hydrogen fuel cell devices;
- control equipment arranged for controlling its corresponding fuel cell device to provide said fuel cell device power;

wherein said detect equipment is further arranged for detecting a deficiency in said total amount of power provided by said plurality of interconnected hydrogen fuel cell device;
wherein said process equipment is further arranged for determining a fuel cell device deficiency power for resolving said detected deficiency in said total amount of power, based on said amount of hydrogen fuel cell devices;
wherein said control equipment is further arranged for controlling its corresponding fuel cell device to increase its provided power by said fuel cell device deficiency power.

The advantages of the first aspect of the disclosure are also inherently a part of the second aspect of the disclosure. Furthermore, it is pointed out that although the claims read as if all the equipment according to the present disclosure are incorporated into a single device, a person skilled in the art understands that the same disclosure may be implemented by distributing the equipment over several devices.

In an example, each of said controllers are connected to each other via a bus, wherein each of said controllers further comprise:
- discover equipment arranged for discovering the amount of controllers connected to said bus.

The discover equipment may thus be arranged to transmit a broadcast message for requesting any other controllers present on the bus to make theirselves known.

In a further example, the detect equipment is further arranged for:
- detecting said total amount of power required based on input from said electrical motor and based on input from a battery.

In an example, each of said controllers comprise:
- receive equipment arranged for receiving input that said electrical motor is shut down;
- vent equipment arranged for venting its corresponding fuel cell device with air for removing any residual hydrogen present in the fuel cell stack.

Each of the fuel cell stacks may comprise an air inlet and a hydrogen inlet. Each of these two inlets may be provided with a valve for controlling the amount of air and hydrogen, respectively, towards the fuel cell stacks. In addition, a valve may be present in between the air inlet and the hydrogen inlet. By opening that particular valve, air may be input in the hydrogen inlet. That particular valve may thus be used for assuring that the air is input into the device for removing any residual hydrogen present in the fuel cell stack. The vent equipment may be a ventilator or a air pump.

In yet another example, the hydrogen fuel cell system further comprises a monitoring system for monitoring conditions of each of said plurality of fuel cell stacks, and comprises a communication module arranged for communicating monitored conditions to a user.

In a third aspect, there is provided a controller arranged for operating in a hydrogen fuel cell system in accordance with any of the examples as provided above.

In a fourth aspect, there is provided a vehicle comprising a hydrogen fuel cell system in accordance with any of examples as provided above. The vehicle is, for example, a transportation device like a bus.

The above-mentioned and other features and advantages of the disclosure will be best understood from the following description referring to the attached drawings. In the drawings, like reference numerals denote identical parts or parts performing an identical or comparable function or operation.

### Brief description of the Figures

Figure 1 schematically shows a flowchart of a method according to the present disclosure;
Figure 2 schematically shows a full cell system according to the present disclosure;
Figure 3 schematically shows a controller for use in the present disclosure.

### Detailed description of the Figures

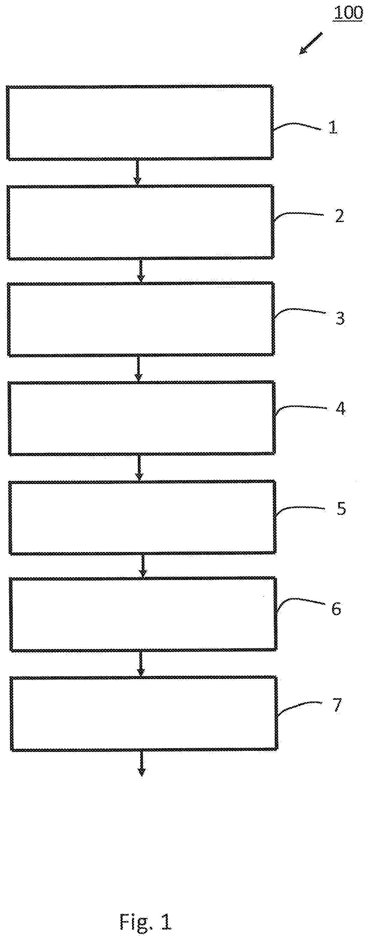

Figure 1 shows a schematic chart 10 illustrating the various steps of a method according to the present disclosure for controlling a hydrogen fuel cell system which is arranged for providing power to an electrical motor. Said hydrogen fuel cell system comprises a plurality of hydrogen fuel cell devices, wherein each of said hydrogen fuel cell devices has a controller, and wherein said plurality of controllers are interconnected with each other.

Said method 10 comprises the steps of:
- detecting 1, by each of said controllers 11 separately, a total amount of power required to be provided by said hydrogen fuel cell system 100;
- determining 2, by each of said controllers 11 separately, a fuel cell device power for its corresponding fuel cell device 12 based on said detected total amount of power and an amount of hydrogen fuel cell devices 12;
- controlling 3, by each of said controllers 11 separately, its corresponding fuel cell device 12 to provide said fuel cell device power;
- detecting 4, by at least one of said plurality of controllers 11, a deficiency in said total amount of power provided by said plurality of interconnected hydrogen fuel cell device 12;
- determining 5, by said at least one of said plurality of controllers 11, a fuel cell device deficiency power for resolving said detected deficiency in said total amount of power, based on said amount of hydrogen fuel cell devices 12;
- controlling 6, by said at least one of said plurality of controllers 11, its corresponding fuel cell device 12 to increase its provided power by said fuel cell device deficiency power.

Said method may further comprise the step of:
- discovering 7, by each of said controllers 11 separately, the amount of controllers 11 connected to said bus 13.

In the present case, the discovery process may be initiated when the fuel cell system is turned on, or may take place when installing or replacing a particular controller in the system.

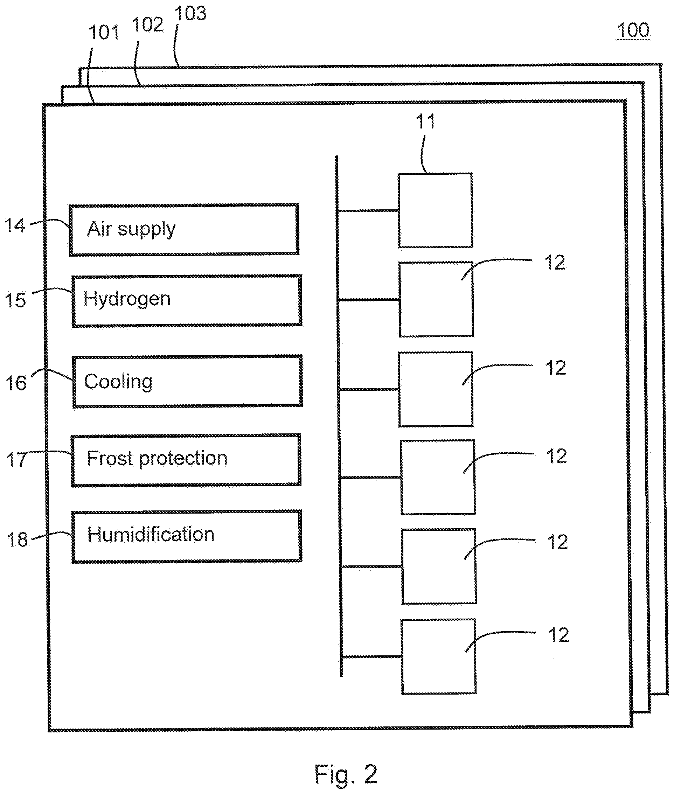

Figure 2 shows a fuel cell system 100 for performing said method according to the present disclosure. Said system 100 comprises a multitude of fuel cell devices 101, 102, 103. Each fuel cell device comprises a plurality of fuel cell stacks 12 and a controller 11. Each fuel cell stack 12 are connected to each other, preferably in series, and each fuel cell stack 12 is connected to the controller 11.

Each of the fuel cell stacks 12 may be provided with sensors and/or actuators (not shown), wherein the corresponding controller 11 may be arranged to read out these sensors and/or to actuate the corresponding actuators.

One of the advantageous of a decentralized system, i.e. a system which does not utilize a single controller for controlling each of the fuel cell devices 101, 102, 103, is that it makes the same much more flexible. It is easier to incorporate new fuel cell devices into the system and to replace current ones in a decentralized system.

Each of the fuel cell devices 101, 102, 103 may further comprise an air supply 14 for supplying air, i.e. oxygen, to the fuel cell stacks 12, and may comprise a hydrogen recirculation 15 for inputting hydrogen to the fuel cell stacks 12, and may comprise a cooling component 16 for cooling the fuel cell stacks 12, and may comprise a frost protection device 17 for assuring that the components in the system 100 will not get frozen, and my comprise a humidification device 18. All of these components may further be connected to the controller 11, for communicating the corresponding data to the outside world.

In other words, the present disclosure provides in a method for controlling a cascade fuel cell system, wherein said method includes:
a) Operating a number of fuel cell devices set in an initial operation state;
b) Detecting the required power output of the cascade fuel cell system;
c) Sharing the required power output between fuel cell devices in said cascade fuel cell system;
d) Detecting if any of said fuel cell devices in said cascade system cannot supply a required share of power output and sharing said deficit power output between other fuel cell devices in said cascade fuel cell system.

Further, a method is provided for removing hydrogen from a fuel cell system at the end of an operating cycle in order to remove a high voltage from said fuel cell stacks. This further reduces the risk of hazard voltage during maintenance and servicing. The method may remove said hydrogen from said fuel cell system by venting said hydrogen pass with air, for example oxygen.

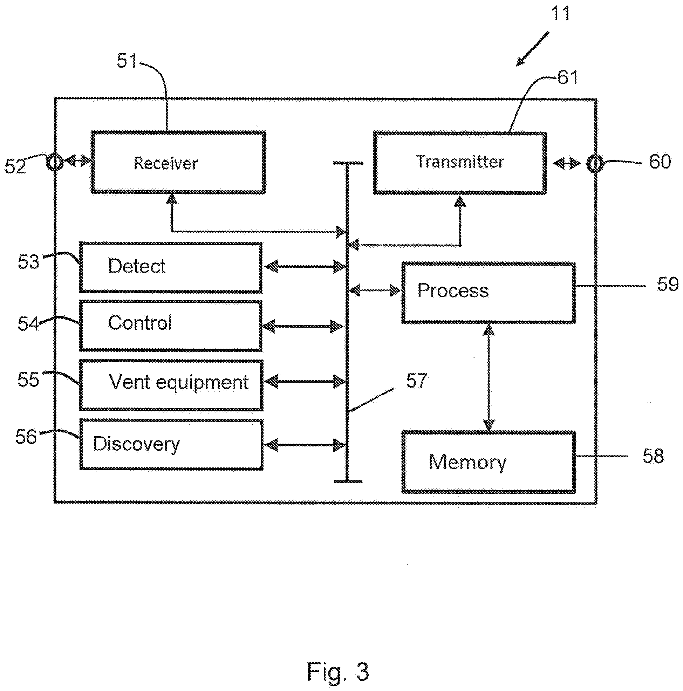

Figure 3 schematically shows a controller 11 for use in the present disclosure.

The controller 11 comprises a receiver 51, connected to an input terminal 52, and a transmitter 61, connected to an output terminal 60, wherein said receiver 51 and the transmitter 61 are arranged for receiving, and transmitting, messages over the bus. The controller 11 further comprises detect equipment 53, control equipment 54, vent equipment 55 and discovery equipment 56. Further, a process equipment 59 is incorporated connected to a memory for correct operation of the controller 11.

Other variations to the disclosed examples can be understood and effected by those skilled in the art in practicing the claimed disclosure, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not construed as limiting scope thereof.

## Claims

1. A method for controlling a hydrogen fuel cell system, comprising a plurality of hydrogen fuel cell devices, wherein said hydrogen fuel cell system is arranged for providing power to an electrical motor by each of said hydrogen fuel cell devices, each of said hydrogen fuel cell devices comprising a plurality of hydrogen fuel cell stacks, and a controller, wherein said plurality of controllers of each of said hydrogen fuel cell devices are interconnected, said method comprising the steps of:
- detecting, by each of said controllers separately, a total amount of power required to be provided by said hydrogen fuel cell system;
- determining, by each of said controllers separately, a fuel cell device power for its corresponding fuel cell device based on said detected total amount of power and an amount of hydrogen fuel cell devices;
- controlling, by each of said controllers separately, its corresponding fuel cell device to provide said fuel cell device power;
- detecting, by at least one of said plurality of controllers, a deficiency in said total amount of power provided by said plurality of interconnected hydrogen fuel cell devices;
- determining, by said at least one of said plurality of controllers, a fuel cell device deficiency power for resolving said detected deficiency in said total amount of power, based on said amount of hydrogen fuel cell devices;
- controlling, by said at least one of said plurality of controllers, its corresponding fuel cell device to increase its provided power by said fuel cell device deficiency power.

2. A method in accordance with claim 1, wherein each of said controllers are connected to each other via a bus, said method further comprises the step of:
- discovering, by each of said controllers separately, the amount of controllers connected to said bus.

3. A method in accordance with any of the previous claims, wherein said step of detecting said total amount of power required to be provided by said hydrogen fuel cell system comprises:
- detecting, by each of said controllers separately, said total amount of power required based on input from said electrical motor and based on input from a battery.

4. A method in accordance with any of the previous claims, wherein said method further comprises the steps of:
- receiving, by each of said controllers separately, input that said electrical motor is shut down;
- venting, by each of said controllers separately, fuel cell stacks in its corresponding fuel cell device with air for removing any residual hydrogen present in the fuel cell devices.

5. A method in accordance with any of the previous claims, wherein said hydrogen fuel cell system further comprises a monitoring system for monitoring conditions of each of said plurality of fuel cell devices, and comprises a communication module, said method further comprises the steps of:
- monitoring, by said monitoring system, said conditions of each of said plurality of fuel cell devices;
- communicating, by said communication module, said monitored conditions to a user equipment.

6. A hydrogen fuel cell system arranged for providing power to an electrical motor, said hydrogen fuel cell system comprising a plurality of hydrogen fuel cell devices, wherein said hydrogen fuel cell system is arranged for providing power to an electrical motor bye ach of said hydrogen fuel cell devices, each of said hydrogen fuel cell devices comprising a plurality of hydrogen fuel cell stacks, and a controller, wherein said plurality of controllers of said hydrogen fuel cell devices are interconnected, each of said controllers comprising:
- detect equipment arranged for detecting a total amount of power required to be provided by said hydrogen fuel cell system;
- process equipment arranged for determining a fuel cell device power for its corresponding fuel cell device based on said detected total amount of power and an amount of hydrogen fuel cell devices;
- control equipment arranged for controlling its corresponding fuel cell device to provide said fuel cell device power;
wherein said detect equipment is further arranged for detecting a deficiency in said total amount of power provided by said plurality of interconnected hydrogen fuel cell device;
wherein said process equipment is further arranged for determining a fuel cell device deficiency power for resolving said detected deficiency in said total amount of power, based on said amount of hydrogen fuel cell devices;
wherein said control equipment is further arranged for controlling its corresponding fuel cell device to increase its provided power by said fuel cell device deficiency power.

7. A hydrogen fuel cell system in accordance with claim 6, wherein each of said controllers are connected to each other via a bus, wherein each of said controllers further comprise:
- discover equipment arranged for discovering the amount of controllers connected to said bus.

8. A hydrogen fuel cell system in accordance with any of the claims 6 - 7, wherein said detect equipment is further arranged for:
- detecting said total amount of power required based on input from said electrical motor and based on input from a battery.

9. A hydrogen fuel cell system in accordance with any of the claims 6 - 8, wherein each of said controllers comprise:
- receive equipment arranged for receiving input that said electrical motor is shut down;
- vent equipment arranged for venting its corresponding fuel cell device with air for removing any residual hydrogen present in the fuel cell device.

10. A hydrogen fuel cell system in accordance with any of the claims 6 - 9, wherein said hydrogen fuel cell system further comprises a monitoring system for monitoring conditions of each of said plurality of fuel cell devices, and comprises a communication module arranged for communicating monitored conditions to a user.

11. A controller arranged for operating in one of said hydrogen fuel cell devices of said hydrogen fuel cell system in accordance with any of the claims 6 - 10.

12. A vehicle comprising a hydrogen fuel cell system in accordance with any of the claims 6 - 10.

## Patentansprüche

1. Verfahren zum Steuern eines Wasserstoffbrennstoffzellensystems, umfassend mehrere Wasserstoffbrennstoffzellenvorrichtungen, wobei das Wasserstoffbrennstoffzellensystem durch jede der Wasserstoffbrennstoffzellenvorrichtungen zur Stromversorgung eines Elektromotors angeordnet ist, wobei jede der Wasserstoffbrennstoffzellenvorrichtungen mehrere Wasserstoffbrennstoffzellenstapel und eine Steuervorrichtung umfasst, wobei die mehreren Steuervorrichtungen jeder der Wasserstoffbrennstoffzellenvorrichtungen zusammengeschaltet sind, das Verfahren die folgenden Schritte umfassend:
- Detektieren, durch jede der Steuervorrichtungen separat, einer erforderlichen Gesamtleistungsmenge, die durch das Wasserstoffbrennstoffzellensystem bereitgestellt werden muss;
- Bestimmen, durch jede der Steuervorrichtungen separat, einer Brennstoffzellenvorrichtungsleistung für ihre entsprechende Brennstoffzellenvorrichtung auf der Grundlage der detektierten Gesamtleistungsmenge und einer Anzahl von Wasserstoffbrennstoffzellenvorrichtungen;
- Steuern, durch jede der Steuervorrichtungen separat, ihrer entsprechenden Brennstoffzellenvorrichtung, um die Brennstoffzellenvorrichtungsleistung bereitzustellen;
- Detektieren, durch mindestens eine der mehreren Steuervorrichtungen, eines Mangels der Gesamtleistungsmenge, die durch die mehreren zusammengeschalteten Wasserstoffbrennstoffzellenvorrichtungen bereitgestellt wird;
- Bestimmen, durch die mindestens eine der mehreren Steuervorrichtungen, einer Brennstoffzellenvorrichtungs-Mangelleistung zum Auflösen des detektierten Mangels der Gesamtleistungsmenge auf der Grundlage der Anzahl von Wasserstoffbrennstoffzellenvorrichtungen;
- Steuern, durch die mindestens eine der mehreren Steuervorrichtungen, ihrer entsprechenden Brennstoffzellenvorrichtung, um ihre bereitgestellte Leistung um die Brennstoffzellenvorrichtungs-Mangelleistung zu erhöhen.

2. Verfahren nach Anspruch 1, wobei jede der Steuervorrichtungen über einen Bus miteinander verbunden ist, wobei das Verfahren weiterhin den folgenden Schritt umfasst:
- Erkennen, durch jede der Steuervorrichtungen separat, der Anzahl von Steuervorrichtungen, die mit dem Bus verbunden sind.

3. Verfahren nach einem der vorhergehenden Ansprüche, wobei der Schritt des Detektierens der erforderlichen Gesamtleistungsmenge, die durch das Wasserstoffbrennstoffzellensystem bereitgestellt werden muss, Folgendes umfasst:
- Detektieren, durch jede der Steuervorrichtungen separat, der erforderlichen Gesamtleistungsmenge auf der Grundlage einer Eingabe von dem Elektromotor und auf der Grundlage einer Eingabe von einer Batterie.

4. Verfahren nach einem der vorhergehenden Ansprüche, wobei das Verfahren weiterhin die folgenden Schritte umfasst:
- Empfangen, durch jede der Steuervorrichtungen separat, einer Eingabe, dass der Elektromotor abgeschaltet ist;
- Belüften, durch jede der Steuervorrichtungen separat, von Brennstoffzellenstapeln in ihrer entsprechenden Brennstoffzellenvorrichtung mit Luft zum Entfernen von Restwasserstoff, der in den Brennstoffzellenvorrichtungen vorhanden ist.

5. Verfahren nach einem der vorhergehenden Ansprüche, wobei das Wasserstoffbrennstoffzellensystem weiterhin ein Überwachungssystem zum Überwachen von Zuständen jeder der mehreren Brennstoffzellenvorrichtungen umfasst und ein Kommunikationsmodul umfasst, wobei das Verfahren weiterhin die folgenden Schritte umfasst:
- Überwachen, durch das Überwachungssystem, der Zustände jeder der mehreren Brennstoffzellenvorrichtungen;
- Kommunizieren, durch das Kommunikationsmodul, der überwachten Zustände an eine Benutzerausrüstung.

6. Wasserstoffbrennstoffzellensystem, das zur Stromversorgung eines Elektromotors angeordnet ist, wobei das Wasserstoffbrennstoffzellensystem mehrere Wasserstoffbrennstoffzellenvorrichtungen umfasst, wobei das Wasserstoffbrennstoffzellensystem durch jede der Wasserstoffbrennstoffzellenvorrichtungen zur Stromversorgung eines Elektromotors angeordnet ist, wobei jede der Wasserstoffbrennstoffzellenvorrichtungen mehrere Wasserstoffbrennstoffzellenstapel und eine Steuervorrichtung umfasst, wobei die mehreren Steuervorrichtungen der Wasserstoffbrennstoffzellenvorrichtungen zusammengeschaltet sind, jede der Steuervorrichtungen Folgendes umfassend:
- Detektionsausrüstung, die zum Detektieren einer erforderlichen Gesamtleistungsmenge angeordnet ist, die durch das Wasserstoffbrennstoffzellensystem bereitgestellt werden muss;
- Prozessausrüstung, die zum Bestimmen einer Brennstoffzellenvorrichtungsleistung für ihre entsprechende Brennstoffzellenvorrichtung auf der Grundlage der detektierten Gesamtleistungsmenge und einer Anzahl von Wasserstoffbrennstoffzellenvorrichtungen angeordnet ist;
- Steuerausrüstung, die zum Steuern ihrer entsprechenden Brennstoffzellenvorrichtung angeordnet ist, um die Brennstoffzellenvorrichtungsleistung bereitzustellen;
wobei die Detektionsausrüstung weiterhin zum Detektieren eines Mangels der Gesamtleistungsmenge angeordnet ist, die durch die mehreren zusammengeschalteten Wasserstoffbrennstoffzellenvorrichtungen bereitgestellt wird;
wobei die Prozessausrüstung weiterhin zum Bestimmen einer Brennstoffzellenvorrichtungs-Mangelleistung zum Auflösen des detektierten Mangels der Gesamtleistungsmenge auf der Grundlage der Anzahl von Wasserstoffbrennstoffzellenvorrichtungen angeordnet ist;
wobei die Steuerausrüstung weiterhin zum Steuern ihrer entsprechenden Brennstoffzellenvorrichtung angeordnet ist, um ihre bereitgestellte Leistung um die Brennstoffzellenvorrichtungs-Mangelleistung zu erhöhen.

7. Wasserstoffbrennstoffzellensystem nach Anspruch 6, wobei jede der Steuervorrichtungen über einen Bus miteinander verbunden ist, wobei jede der Steuervorrichtungen weiterhin Folgendes umfasst:
- Erkennungsausrüstung, die zum Erkennen der Anzahl von Steuervorrichtungen angeordnet ist, die mit dem Bus verbunden sind.

8. Wasserstoffbrennstoffzellensystem nach einem der Ansprüche 6 bis 7, wobei die Detektionsausrüstung weiterhin für Folgendes angeordnet ist:
- Detektieren der erforderlichen Gesamtleistungsmenge auf der Grundlage einer Eingabe von dem Elektromotor und auf der Grundlage einer Eingabe von einer Batterie.

9. Wasserstoffbrennstoffzellensystem nach einem der Ansprüche 6 bis 8, wobei jede der Steuervorrichtungen Folgendes umfasst:
- Empfangsausrüstung, die zum Empfangen einer Eingabe angeordnet ist, dass der Elektromotor abgeschaltet ist;
- Belüftungsausrüstung, die zum Belüften ihrer entsprechenden Brennstoffzellenvorrichtung mit Luft zum Entfernen von Restwasserstoff angeordnet ist, der in der Brennstoffzellenvorrichtung vorhanden ist.

10. Wasserstoffbrennstoffzellensystem nach einem der Ansprüche 6 bis 9, wobei das Wasserstoffbrennstoffzellensystem weiterhin ein Überwachungssystem zum Überwachen von Zuständen jeder der mehreren Brennstoffzellenvorrichtungen umfasst und ein Kommunikationsmodul umfasst, das zum Kommunizieren überwachter Zustände an einen Benutzer angeordnet ist.

11. Steuervorrichtung, die zum Arbeiten in einer der Wasserstoffbrennstoffzellenvorrichtungen des Wasserstoffbrennstoffzellensystems nach einem der Ansprüche 6 bis 10 angeordnet ist.

12. Fahrzeug, umfassend ein Wasserstoffbrennstoffzellensystem nach einem der Ansprüche 6 bis 10.

## Revendications

1. Procédé de commande d'un système de pile à combustible à hydrogène, comprenant une pluralité de dispositifs de pile à combustible à hydrogène, dans lequel ledit système de pile à combustible à hydrogène est agencé pour fournir de la puissance à un moteur électrique par chacun desdits dispositifs de pile à combustible à hydrogène, chacun desdits dispositifs de pile à combustible à hydrogène comprenant une pluralité d'empilements de piles à combustible à hydrogène, et un dispositif de commande, dans lequel ladite pluralité de dispositifs de commande de chacun desdits dispositifs de pile à combustible à hydrogène sont interconnectés, ledit procédé comprenant les étapes de :
- détection, par chacun desdits dispositifs de commande séparément, d'une quantité totale de puissance devant être fournie par ledit système de pile à combustible à hydrogène ;
- détermination, par chacun desdits dispositifs de commande séparément, d'une puissance de dispositif de pile à combustible pour son dispositif de pile à combustible correspondant sur la base de ladite quantité totale de puissance détectée et d'une quantité de dispositifs de pile à combustible à hydrogène ;
- commande, par chacun desdits dispositifs de commande séparément, de son dispositif de pile à combustible correspondant pour fournir ladite puissance de dispositif de pile à combustible ;
- détection, par au moins l'un de ladite pluralité de dispositifs de commande, d'un manque dans ladite quantité totale de puissance fournie par ladite pluralité de dispositifs de pile à combustible à hydrogène interconnectés ;
- détermination, par ledit au moins un de ladite pluralité de dispositifs de commande, d'une puissance manquante de dispositif de pile à combustible pour résoudre ledit manque détecté dans ladite quantité totale de puissance, sur la base de ladite quantité de dispositifs de pile à combustible à hydrogène ;
- commande, par ledit au moins un de ladite pluralité de dispositifs de commande, de son dispositif de pile à combustible correspondant pour augmenter sa puissance fournie par ladite puissance manquante de dispositif de pile à combustible.

2. Procédé selon la revendication 1, dans lequel lesdits dispositifs de commande sont chacun connectés les uns aux autres via un bus, ledit procédé comprend en outre l'étape de :
- découverte, par chacun desdits dispositifs de commande séparément, de la quantité de dispositifs de commande connectés audit bus.

3. Procédé selon l'une des revendications précédentes, dans lequel ladite étape de détection de ladite quantité totale de puissance devant être fournie par ledit système de pile à combustible à hydrogène comprend :
- la détection, par chacun desdits dispositifs de commande séparément, de ladite quantité totale de puissance requise sur la base d'une entrée provenant dudit moteur électrique et sur la base d'une entrée provenant d'une batterie.

4. Procédé selon l'une des revendications précédentes, dans lequel ledit procédé comprend en outre les étapes de :
- réception, par chacun desdits dispositifs de commande séparément, d'une entrée indiquant que ledit moteur électrique est arrêté ;
- ventilation, par chacun desdits dispositifs de commande séparément, d'empilements de piles à combustible dans son dispositif de pile à combustible correspondant avec de l'air pour éliminer tout hydrogène résiduel présent dans les dispositifs de pile à combustible.

5. Procédé selon l'une des revendications précédentes, dans lequel ledit système de pile à combustible à hydrogène comprend en outre un système de surveillance pour surveiller des conditions de chacun de ladite pluralité de dispositifs de pile à combustible, et comprend un module de communication, ledit procédé comprend en outre les étapes de :
- surveillance, par ledit système de surveillance, desdites conditions de chacun de ladite pluralité de dispositifs de pile à combustible ;
- communication, par ledit module de communication, desdites conditions surveillées à un équipement utilisateur.

6. Système de pile à combustible à hydrogène agencé pour fournir de la puissance à un moteur électrique, ledit système de pile à combustible à hydrogène comprenant une pluralité de dispositifs de pile à combustible à hydrogène, dans lequel ledit système de pile à combustible à hydrogène est agencé pour fournir de la puissance à un moteur électrique par chacun desdits dispositifs de pile à combustible à hydrogène, chacun desdits dispositifs de pile à combustible à hydrogène comprenant une pluralité d'empilements de piles à combustible à hydrogène, et un dispositif de commande, dans lequel ladite pluralité de dispositifs de commande desdits dispositifs de pile à combustible à hydrogène sont interconnectés, chacun desdits dispositifs de commande comprenant :
- un équipement de détection agencé pour détecter une quantité totale de puissance devant être fournie par ledit système de pile à combustible à hydrogène ;
- un équipement de traitement agencé pour déterminer une puissance de dispositif de pile à combustible pour son dispositif de pile à combustible correspondant sur la base de ladite quantité totale de puissance détectée et d'une quantité de dispositifs de pile à combustible à hydrogène ;
- un équipement de commande agencé pour commander son dispositif de pile à combustible correspondant afin de fournir ladite puissance de dispositif de pile à combustible ;
dans lequel ledit équipement de détection est en outre agencé pour détecter un manque dans ladite quantité totale de puissance fournie par ladite pluralité de dispositifs de pile à combustible à hydrogène interconnectés ;
dans lequel ledit équipement de traitement est en outre agencé pour déterminer une puissance manquante de dispositif de pile à combustible pour résoudre ledit manque détecté dans ladite quantité totale de puissance, sur la base de ladite quantité de dispositifs de pile à combustible à hydrogène ;
dans lequel ledit équipement de commande est en outre agencé pour commander son dispositif de pile à combustible correspondant pour augmenter sa puissance fournie par ladite puissance manquante de dispositif de pile à combustible.

7. Système de pile à combustible à hydrogène selon la revendication 6, dans lequel lesdits dispositifs de commande sont chacun connectés les uns aux autres via un bus, dans lequel chacun desdits dispositifs de commande comprend en outre :
- un équipement de découverte agencé pour découvrir la quantité de dispositifs de commande connectés audit bus.

8. Système de pile à combustible à hydrogène selon l'une des revendications 6 et 7, dans lequel ledit équipement de détection est en outre agencé pour :
- détecter ladite quantité totale de puissance requise sur la base d'une entrée provenant dudit moteur électrique et sur la base d'une entrée provenant d'une batterie.

9. Système de pile à combustible à hydrogène selon l'une des revendications 6 à 8, dans lequel chacun desdits dispositifs de commande comprend :
- un équipement de réception agencé pour recevoir une entrée indiquant que ledit moteur électrique est arrêté ;
- un équipement de ventilation agencé pour ventiler son dispositif de pile à combustible correspondant avec de l'air pour éliminer tout hydrogène résiduel présent dans le dispositif de pile à combustible.

10. Système de pile à combustible à hydrogène selon l'une des revendications 6 à 9, dans lequel ledit système de pile à combustible à hydrogène comprend en outre un système de surveillance pour surveiller des conditions de chacun de ladite pluralité de dispositifs de pile à combustible, et comprend un module de communication agencé pour communiquer les conditions surveillées à un utilisateur.

11. Dispositif de commande agencé pour fonctionner dans l'un desdits dispositifs de pile à combustible à hydrogène dudit système de pile à combustible à hydrogène selon l'une des revendications 6 à 10.

12. Véhicule comprenant un système de pile à combustible à hydrogène selon l'une des revendications 6 à 10.
